# EUROPÄISCHE PATENTSCHRIFT

(11) **EP 1 840 388 B1**
(45) Veröffentlichungstag und Bekanntmachung des Hinweises auf die Patenterteilung: **04.08.2010**
(21) Anmeldenummer: 07004210.6
(22) Anmeldetag: 01.03.2007
(51) Int. Cl.: F15B 15/12, B23K 1/00, B23K 11/14, B23K 26/28, B23K 101/00

(54) **Verfahren zum Herstellen eines Schwenkaggregats**
Method for producing an oscillating actuator
Procédé de fabrication d'un actionneur oscillant

(30) Priorität: 28.03.2006 DE 102006014140
(43) Veröffentlichungstag der Anmeldung: 03.10.2007
(73) Patentinhaber: ZF Friedrichshafen AG, 88046 Friedrichshafen (DE)
(72) Erfinder: Becker, Dirk, 56594 Willroth (DE); Schiffler, Stefan, 97539 Wonfurt (DE); Brand, Ansgar, 97456 Dittelbrunn (DE); Reuss, Matthias, 97440 Stettbach (DE); Beilner, Rainer, 97422 Schweinfurt (DE)

(56) Entgegenhaltungen:
- DE-A1- 2 017 362
- DE-A1- 2 019 372
- DE-A1- 4 217 132
- DE-A1- 19 607 067
- DE-A1-102004 020 190
- GB-A- 2 043 783
- US-A- 3 049 102

## Beschreibung

Die Erfindung betrifft ein Verfahren zur Herstellung eines Schwenkaggregats gemäß dem Oberbegriff von Patentanspruch 1.

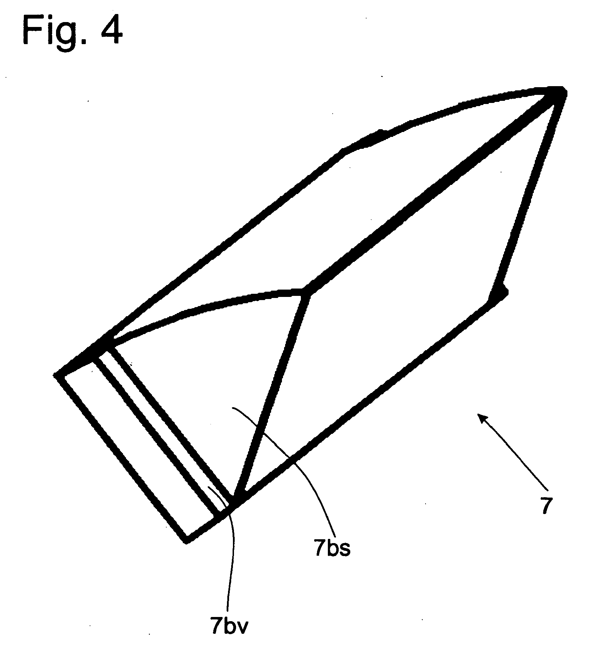

Schon in der DE 10 2004 020 190 A1 wird beschrieben, dass das Gehäuse bei einem Schwenkaggregat konventionell aus einem kaltgezogenen hergestellt wird. Dieses Verfahren gewährleistet eine große Belastungsgrenze bei den gehäuseseitigen Rippen und eine gute Formgenauigkeit des Gehäuses. Andererseits ist die Herstellung sehr teuer. Die DE 10 2004 020 190 A1 offenbart ein Gehäuse mit einer Nut, die einen Passsteg einer Rippe aufnimmt, die zwei Arbeitskammern voneinander trennt. Neben einer formschlüssigen Verbindung besteht zusätzlich eine Schweißverbindung (Fig. 4).

Die US 2 793 623 betrifft ein Schwenkaggregat mit einer axial verlaufenden Rippe im Gehäuse, wobei zwischen dem Gehäuse und der Rippe eine schwalbenschwanzförmige Passung vorliegt. Auch die Schwenkwelle weist einen mehrteiligen Aufbau auf, wobei ein axial verlaufender Flügel in eine Längsnut eingepasst und anschließend verschweißt ist.

Aus der DE 29 05 193 A1 ist ein druckmittelbetätigter Drehantrieb bekannt, dessen Gehäuse eine formschlüssig eingefügte Längsrippe aufweist, die zusätzlich verklebt sein kann. Es werden keine Hinweise zum Herstellungsverfahren der Klebeverbindung gegeben.

Bei allen Varianten kommt zwischen dem Gehäuse und der Rippe eine formschlüssige Verbindung zur Anwendung, die in der Herstellung sehr aufwändig sein kann.

Aus der DE 196 07 067 A1 ist ein Schwenkmotor bekannt, dessen rippenförmigen Schwenklager mit dem Rotor des Schwenkmotors stoffschlüssig z. B. mittels Löten befestigt sind. Eine genauere Beschreibung der Lötstelle ist nicht offenbart.

Die US 3 049 102 betrifft einen Schwenkaktuator, dessen Rippen oder Flügel ebenfalls durch ein Lötverfahren befestigt sind. Offenbart ist eine mechanische Befestigung der Rippen und Flügel im Schwenkmotor.

Aufgabe der vorliegenden Erfindung ist es, ein Verfahren zur Herstellung eines Gehäuse oder einer Schwenkwelle mit mindestens einer an der Innenwandung verlaufenden Rippe derart weiterzuentwickeln, so dass die aus dem Stand der Technik bekannte Herstellungsprobleme behoben sind.

Erfindungsgemäß wird die Aufgabe dadurch gelöst, die Rippe vor dem Verlötvorgang mit einem Schweißverfahren fixiert wird.

Die Schweißnaht soll nach Möglichkeit den Arbeitsbereich des Schwenkaggregats nicht beeinträchtigen. Deshalb wird die Schweißverbindung an einer axialen Stirnfläche ausgeführt.

Das Grundbauteil wird insbesondere beim Gehäuse vorteilhafterweise von einem einfachen Halbzeug in Form eines Rohres gebildet. Aufwändige Räum- und/oder Fräsverfahren sind zur Herstellung des Gehäuses, aber auch der Welle nicht notwendig.

In weiterer vorteilhafter Ausgestaltung wird das Lot dem mindestens einen Grundbauteil zugeführt und zusammen mit der Rippe erhitzt, wodurch das Lot aufgrund der Kapillarwirkung in den Kontaktbereich zwischen den beiden Bauteilen eindringt. Diese Vorgehensweise lässt sich in einem Durchlaufofen sehr gut automatisieren.

Für die Zuführung des Lots an die Rippe sind zwei Verfahrensmöglichkeiten vorgesehen. Das Lot kann in Blättchenform oder in Pastenform der Rippe zugeführt werden.

Als eine besonders geeignete Stellung für die Zuführung des Lots hat die axiale Stirnfläche der Rippe herausgestellt.

Insbesondere dann, wenn das mindestens eine Grundbauteil in einer senkrechten Lage erhitzt wird, kann das flüssige Lot in den Kontaktbereich zwischen dem Grundbauteil und der Rippe eindringen.

Anhand der folgenden Figurenbeschreibung soll die Erfindung näher erläutert werden.

Es zeigt:
- Fig. 1 - 3: Gehäuse in der Ansicht und zwei Schnittebenen
- Fig. 4: Rippe als Einzelteil
- Fig. 5 - 7: Welle als Einzelteil in Ansichten und im Schnitt

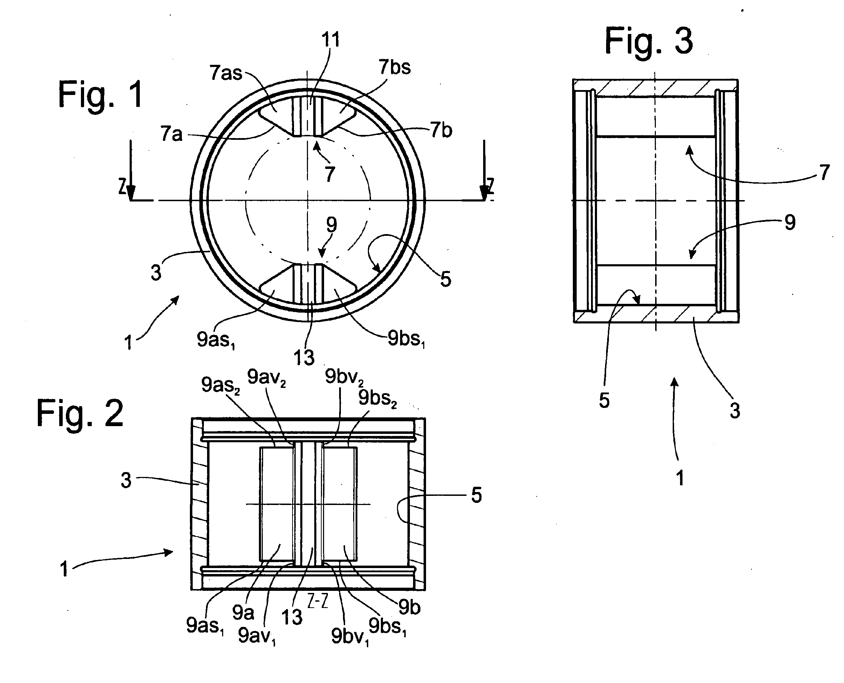

Die Figuren 1 bis 3 zeigen ein Gehäuse 1 als ein Grundbauteil, wie es z. B. in einem Schwenkaggregat nach der DE 44 42 223 C2 zur Anwendung kommt. Der Inhalt der DE 44 42 223 C2 stellt einen Teil der Offenbarung dieser Figurenbeschreibung dar. Das Gehäuse 1 wird von einem Rohrkörper 3 gebildet, der im Bereich der Arbeitsräume des Schwenkaggregats einen konstanten Innendurchmesser und damit eine in Umfangsrichtung kontinuierlich verlaufende Oberfläche aufweist. An den Enden ist der Rohrkörper für die beiden Deckel des Schwenkaggregats auf einen größeren Durchmesser ausgedreht. An einer Innenwandung 5 des Gehäuses 1 sind zwei Rippen 7; 9 angeordnet. In dieser Ausführungsform werden die Rippen von zwei beabstandeten Segmenten 7a; 7b; 9a; 9b gebildet, die in ihrem Abstandsbereich eine Axialnut 11; 13 bestimmen. Grundsätzlich kann die Rippe 7; 9 auch von einem einstückigen Bauteil gebildet werden.

In der Zusammenschau der Fig. 1 und 3, sowie einer vergrößerten Darstellung der Rippe nach Fig. 4 ist erkennbar, dass eine endseitige Stirnfläche 7as; 7bs; 9as₁; 9as₂; 9bs₁; 9bs₂ der Segmente mit einem in Nutrichtung verlaufenden axialen Versatz 9av₁; 9av₂; 9bv₁; 9bv₂ ausgeführt ist.

Bei der Herstellung des Gehäuses 1 werden die vorgefertigten Segmente 7a; 7b; 9a; 9b in den Rohrkörper 3 des Gehäuse des Schwenkaggregats eingeführt und fixiert. Die Segmente werden in einer nicht dargestellten Vorrichtung im Bereich des axialen Versatzes 7av₁; 7av₂; 7bv₁; 7bv₂; 9av₁; 9av₂; 9bv₁; 9bv₂ an der Stirnflächen 7as₁; 7bs₂; 9as₁; 9as₂ verschweißt, z. B. mit einem Laserschweißverfahren oder auch mit einem Schutzgasschweißverfahren. Anschließend wird Lotmittel in Form von Blättchen oder Paste einer Stirnfläche 7as₁; 9as₁; der Rippe 7; 9 zugeführt. Bevorzugt soll das Gehäuse 1 dabei eine senkrechte Montageposition einnehmen. Das Gehäuse 1 wird anschließend in einem Ofen erhitzt, wodurch das Lotmittel verflüssigt wird und in den Kontaktbereich zwischen den beiden Bauteilen 3; 7; 9 eindringt, so dass eine stoffschlüssige Verbindung zwischen der Rippe 7; 9 und der Innenwandung 5 vorliegt.

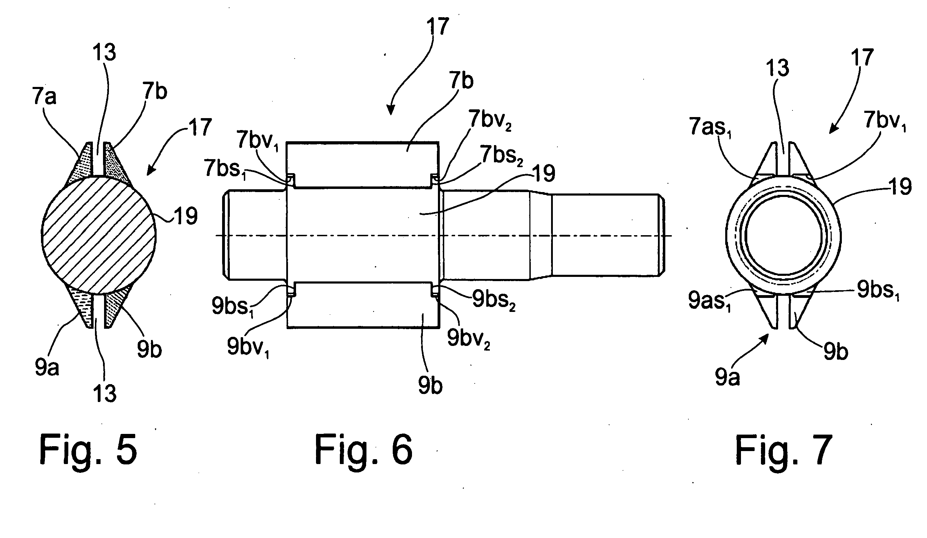

Mit den Figuren 5 bis 7 soll gezeigt werden, dass die Erfindung auch bei einer Welle 17 als Grundbauteil des Schwenkaggregats anwendbar ist. Auf der gleichmäßig zylindrischen Mantelfläche 19 sind ebenfalls Rippen 7; 9 aufgesetzt. Auch diese Rippen weisen an ihren Stirnflächen 7as₁; 7bs₂; 9as₁; 9as₂ einen axialen Versatz 7av₁; 7bv₁; 7bv₂ auf, um einen Raum für eine Schweißverbindung zu schaffen, die axial über die Stirnfläche nicht vorsteht, so dass keine Klemmprobleme zwischen den Rippen 7; 9 der Welle 17 und den Deckeln des Gehäuses 1 auftreten können.

## Patentansprüche

1. Verfahren zur Herstellung eines Schwenkaggregats mit einem rohrförmigen Gehäuse (1) und einer darin schwenkbar gelagerten Welle als Grundbauteile, wobei eine axial verlaufenden Rippe (7; 9) auf einer Innenwandung des Gehäuses (1) und/oder einer äußere Mantelfläche der Welle mittels einer stoffschlüssige Verbindung fixiert wird, wobei an dem Grundbauteil (1; 17) eine in Umfangsrichtung kontinuierlich verlaufende Oberfläche hergestellt wird und die Rippe (7; 9) an mindestens einem der Grundbauteile (1; 17) aufgesetzt und festgelötet wird,
**dadurch gekennzeichnet,**
**dass** die Rippe (7; 9) vor dem Verlötvorgang mit einem Schweißverfahren fixiert wird.

2. Verfahren nach Anspruch 1,
**dadurch gekennzeichnet,**
**dass** das Lot dem mindestens einen Grundbauteil (1; 17) zugeführt und zusammen mit der Rippe (7; 9) erhitzt wird, wodurch das Lot aufgrund der Kapillarwirkung in den Kontaktbereich zwischen den beiden Bauteilen (1; 17; 7; 9) eindringt.

3. Verfahren nach Anspruch 1,
**dadurch gekennzeichnet,**
**dass** die Schweißverbindung an einer axialen Stirnfläche (7as₁; 7bs₂; 9as₁; 9as₂) ausgeführt wird.

4. Verfahren nach Anspruch 1,
**dadurch gekennzeichnet,**
**dass** das Lot in Blättchenform der Rippe (7; 9) zugeführt wird.

5. Verfahren nach Anspruch 1,
**dadurch gekennzeichnet,**
**dass** das Lot in Pastenform der Rippe (7; 9) zugeführt wird.

6. Verfahren nach den Ansprüchen 5 oder 6,
**dadurch gekennzeichnet,**
**dass** das Lot auf der axialen Stirnfläche (7as₁; 7bs₂; 9as₁; 9as₂) der Rippe (7; 9) angeordnet wird.

7. Verfahren nach Anspruch 1,
**dadurch gekennzeichnet,**
**dass** das mindestens eine Grundbauteil (1; 17) in einer senkrechten Lage erhitzt wird.

## Claims

1. Method for producing a pivoting assembly with a tubular housing (1) and with a shaft mounted pivotably therein, as basic components, an axially running rib (7; 9) being fixed to an inner wall of the housing (1) and/or to an outer surface area of the shaft by means of a materially integral connection, a surface which runs continuously in the circumferential direction being produced on the basic component (1; 17), and the rib (7; 9) being attached and firmly soldered to at least one of the basic components (1; 17), **characterized in that** the rib (7; 9) is fixed by means of a welding method before the soldering operation.

2. Method according to Claim 1, **characterized in that** the solder is supplied to the at least one basic component (1; 17) and is heated together with the rib (7; 9), with the result that the solder penetrates into the contact region between the two components (1; 17; 7; 9) on account of the capillary action.

3. Method according to Claim 1, **characterized in that** the welded joint is executed on an axial end face (7as₁; 7bs₂; 9as₁; 9as₂).

4. Method according to Claim 1, **characterized in that** the solder is supplied in flake form to the rib (7; 9).

5. Method according to Claim 1, **characterized in that** the solder is supplied in paste form to the rib (7; 9).

6. Method according to either one of Claims 5 and 6, **characterized in that** the solder is arranged on the axial end face (7as₁; 7bs₂; 9as₁; 9as₂) of the rib (7; 9).

7. Method according to Claim 1, **characterized in that** the at least one basic component (1; 17) is heated in a vertical position.

## Revendications

1. Procédé de fabrication d'un actionneur oscillant comprenant un boîtier tubulaire (1) et un arbre monté de manière pivotante à l'intérieur en tant que composant de base, une nervure s'étendant axialement (7 ; 9) étant fixée sur une paroi interne du boîtier (1) et/ou sur une surface d'enveloppe extérieure de l'arbre au moyen d'une connexion par liaison de matière, une surface s'étendant en continu dans la direction périphérique étant créée sur le composant de base (1 ; 17) et la nervure (7 ; 9) étant disposée et brasée fixement sur au moins l'un des composants de base (1 ; 17),
**caractérisé en ce que**
la nervure (7 ; 9) est fixée avant l'opération de brasage par un procédé de soudure.

2. Procédé selon la revendication 1,
**caractérisé en ce que** la brasure est acheminée à l'au moins un composant de base (1 ; 17) et est chauffée conjointement avec la nervure (7 ; 9), de sorte que la brasure pénètre entre les deux composants (1 ; 17 ; 7 ; 9) du fait de l'effet capillaire dans la région de contact.

3. Procédé selon la revendication 1,
**caractérisé en ce que**
la connexion soudée est réalisée sur une face frontale axiale (7ₐₛ₁ ; 7_{bs2} ; 9ₐₛ₁ ; 9ₐₛ₂).

4. Procédé selon la revendication 1,
**caractérisé en ce que**
la brasure est acheminée sous forme de paillettes à la nervure (7 ; 9).

5. Procédé selon la revendication 1,
**caractérisé en ce que**
la brasure est acheminée sous forme de pâte à la nervure (7 ; 9).

6. Procédé selon les revendications 5 ou 6,
**caractérisé en ce que**
la brasure est disposée sur la face frontale axiale (7ₐₛ₁ ; 7_{bs2} ; 9ₐₛ₁ ; 9ₐₛ₂) de la nervure (7 ; 9).

7. Procédé selon la revendication 1,
**caractérisé en ce que**
l'au moins un composant de base (1 ; 17) est chauffé dans une position verticale.
